**Europäisches Patentamt**

**European Patent Office**

**Office européen des brevets**

(11) Veröffentlichungsnummer: **0 118 946**

**A2**

(12) **EUROPÄISCHE PATENTANMELDUNG**

(21) Anmeldenummer: **84200270.1**

(22) Anmeldetag: **27.02.84**

(51) Int. Cl.³: **F 16 P 3/12**

(30) Priorität: **04.03.83 CH 1202/83**

(43) Veröffentlichungstag der Anmeldung:
**19.09.84 Patentblatt 84/38**

(84) Benannte Vertragsstaaten:
**DE FR GB SE**

(71) Anmelder: **Alexander Brero AG.**
**Schützenmattweg 10**
**CH-2560 Nidau(CH)**

(72) Erfinder: **Weibel, Rolf**
**Bahnweg 12**
**CH-2557 Studen(CH)**

(74) Vertreter: **Tschudi, Lorenz et al,**
**Bovard AG Patentanwälte VSP Optingenstrasse 16**
**CH-3000 Bern 25(CH)**

(54) **Handschutzvorrichtung für einen Maschinenteil.**

(57) Die Handschutzvorrichtung weist eine Stösselhülse (4) mit einem beweglich gelagerten Stösselkolben (5) auf. In der Stösselhülse (4) sind in Vierkantlöchern (12, 13, 14, 15) Walzen (16, 17, 18, 19) gelagert, die in einem ersten Bereich einer Führungshülse durch Nocken (24, 25, 26, 27) im Stössel in axiale Nuten (31, 32, 33, 34) der Führunghülse gedrückt werden können. Dies geschieht dann, wenn bei der Vorwärtsbewegung der kraftbeaufschagten Stösselhülse 4 mit dem Stösselkolben 5 die Bedienungsperson z.B. die Hand zwischen das zu bearbeitende Werkstück und den Stösselkolben hält. In diesem Falle wird der Stösselkolben 5 trotz der weiteren Hubbewegung der Stösselhülse 4 ausgeklinkt, womit eine Kraftübertragung unmöglich gemacht wird. Im letzten Teil des Hubes des Stösselkolbens wird ein seitliches Herausdrücken der Walzen durch die Nocken durch eine Kraftübertragungsbüchse 36 innerhalb der Führungshülse 7 verunmöglicht, wodurch die Kraftübertragung von der Stösselhülse auf den Stösselkolben und damit auf das Werkzeug erfolgen kann.

./...

FIG. 1

Handschutzvorrichtung für einen Maschinenteil

Die vorliegende Erfindung betrifft eine Handschutzvorrichtung für einen Maschinenteil mit einem in einer Führungshülse geführten kraftbeaufschlagten Kolben.

Bei verschiedenen Maschinen, z.B. Pressen zum Nieten und dergleichen, müssen Werkstücke in den Bereich sich bewegender Maschinenteile von Hand verbracht werden. Dabei besteht die Gefahr von Verletzungen. Es ist deshalb üblich, bei solchen Maschinen eine Handschutzvorrichtung anzubringen, welche im Moment, wo der Presskolben oder dergleichen nach unten bewegt wird und eine Verletzungsgefahr besteht, den Zugang unter den bewegten Maschinenteil absperrt. Diese Handschutzvorrichtungen verlangsamen den Arbeitsprozess und werden als störend empfunden. Deshalb werden dieselben oft abmontiert und werden damit nutzlos, wobei die Verletzungsgefahr weiterbesteht. Es ist deshalb eine Aufgabe der vorliegenden Erfindung, eine Handschutzvorrichtung für Maschinenteile zu schaffen, welche die obgenannten Nachteile nicht aufweist. Der Arbeitsprozess soll durch die Handschutzvorrichtung nicht verlangsamt werden, und es soll jegliche Verletzungsgefahr ausgeschaltet sein.

Dies wird erfindungsgemäss dadurch erzielt, dass der Kolben einen ersten und einen zweiten Kolbenteil aufweist, welche Teile in einem ersten Bereich der Führungshülse gegeneinander verschiebbar und in einem zweiten Bereich der Führungshülse durch Koppelorgane starr miteinander verbunden sind.

Bevorzugte Ausführungformen der Erfindung ergeben sich aus den abhängigen Ansprüchen.

Im folgenden wird anhand der beiliegenden Zeichnungen ein Ausführungsspeispiel der Erfindung näher beschrieben. Es zeigen:

Fig. 1  den Arbeitskolben mit Handschutzvorrichtung bei einer Niet- oder Stanzpresse,

Fig. 2  einen Schnitt gemäss Linie II-II der Fig. 1,

Fig. 3 bis 5  ein Detail der Fig. 1 in vergrössertem Massstab, wobei drei verschiedene Positionen dargestellt sind.

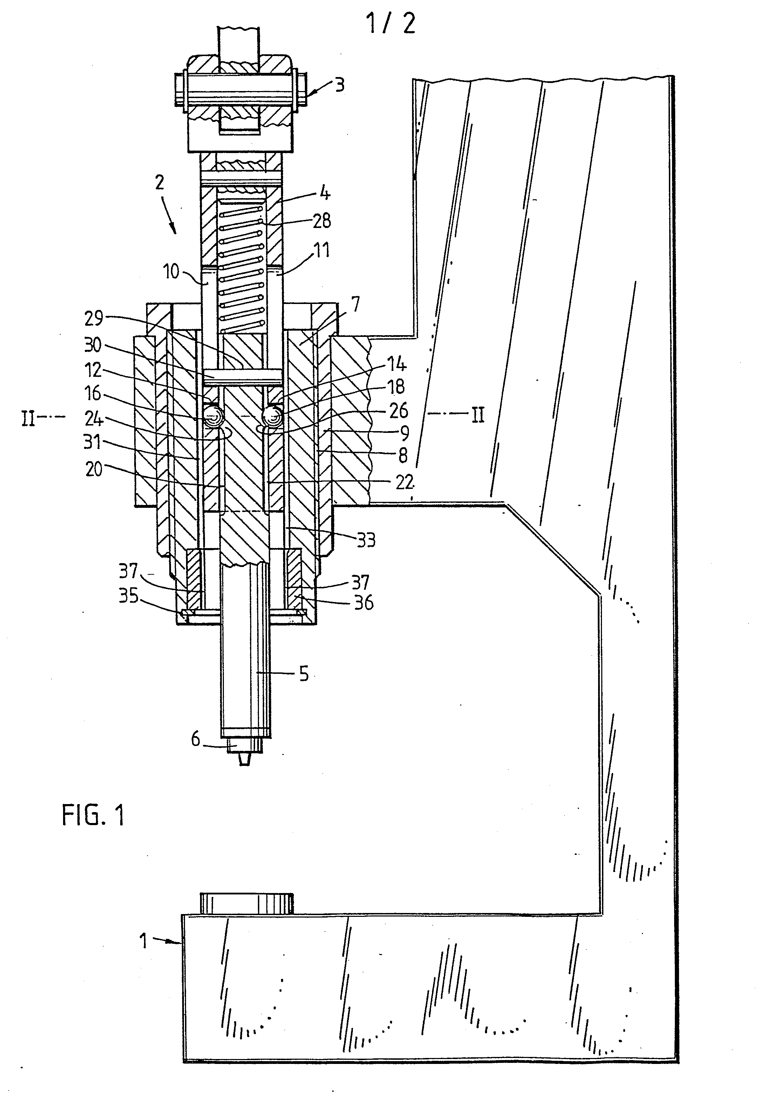

In Fig. 1 ist eine Niet- oder Stanzpresse dargestellt, welche einen kraftbeaufschlagten Kolben 2 zur Ausführung des Nietvorganges umfasst, der an seinem oberen Ende durch einen Kopplungsteil 3 mit einem eine bestimmte Kraft abgebenden Element wie z.B. einem Exzenter, einem Zylinder usw. verbunden ist. Der Arbeitskolben 2 umfasst eine Stösselhülse 4 sowie einen Stösselkolben 5. Unten am Stösselkolben 5 ist ein Niet- oder Stanzwerkzeug 6 vorgesehen. Die Stösselhülse 4 ist in - einer Führungshülse 7 geführt, welche ihrerseits über ein Gewinde 8 mit einer Gewindebüchse 9 verbunden ist. Die Stösselhülse weist zwei axiale Längsnuten 10 und 11 auf. Unterhalb dieser Nuten sind vier Vierkantlöcher 12, 13, 14, 15 vorgesehen, die als Käfig für vier Walzen 16, 17, 18, 19 dienen. Der Stösselkolben 5 ist in der Stösselhülse 4 beweglich gelagert und weist vier der Grösse der verwendeten Walzen angepasste axiale Nuten 20, 21, 22, 23 auf. Die Nuten sind auf derselben Höhe durch vier radial angeordnete Nocken 24, 25, 26, 27 unterbrochen. Der Stösselkolben 5 wird vermittels einer Druckfeder 28 und eines durch die Nuten 10, 11 in der Stösselhülse 4 und durch eine Bohrung 29 im Stösselkolben 5 geführten Anschlagstift 30 in seiner unteren Lage in der Stösselhülse gehalten.

Die Führungshülse 7 ist ebenfalls mit vier axialen, der Grösse der Walzen entsprechenden Längsnuten 31, 32, 33, 34 versehen. Unten in der Führungshülse 7 ist in einer Bohrung 35 eine Kraftübertragungsbüchse 36 eingesetzt. Die Kraftübertragungsbüchse weist in der Verlängerung der Nuten der Führungshülse ebenfalls vier axiale Nuten 37 auf.

Die Stösselhülse 4 wird durch eine Hubbewegung in der axialen Richtung bewegt, wobei der Stösselkolben 5, bedingt durch seine Lagerung in dieser Hülse mitgeführt wird. Im letzten Teil dieser Bewegung laufen die in einem Rollenkäfig mitgeführten vier Walzen 14, 17, 18, 19 in die Kraftübertragungsbüchse 36, die ein Ausweichen resp. Herausdrücken der Rollen durch die Nocken am Stösselkolben verhindert, wodurch eine Kraftübertragung auf das Nietwerkzeug 6 im letzten Teil des Stösselhubes von wenigen Millimetern ermöglicht wird. Wird der Stösselkolben 5, an dem das Nietwerkzeug befestigt ist, während der Vorwärtsbewegung und bevor die Walzen in die Kraftübertragungsbüchse eingefahren sind z.B. durch die Hand der die Maschine bedienenden Person aufgehalten, werden die Walzen durch die Nocken 24, 25, 26, 27 am Stösselkolben in die Nuten der Führungshülse 7 gedrückt, wodurch der Stösselkolben 5 trotz der weiteren Vorwärtsbewegung der Stösselhülse 4 ausklinkt und somit eine Kraftübertragung unmöglich macht.

In der Gewindebüchse 9 kann die Führungshülse 7 in der axialen Richtung höhenverstellt werden. Die Funktionshöhe des Handschutzes kann durch Verstellen der Kraftübertragungsbüchse in der Führungshülse 7 verändert werden.

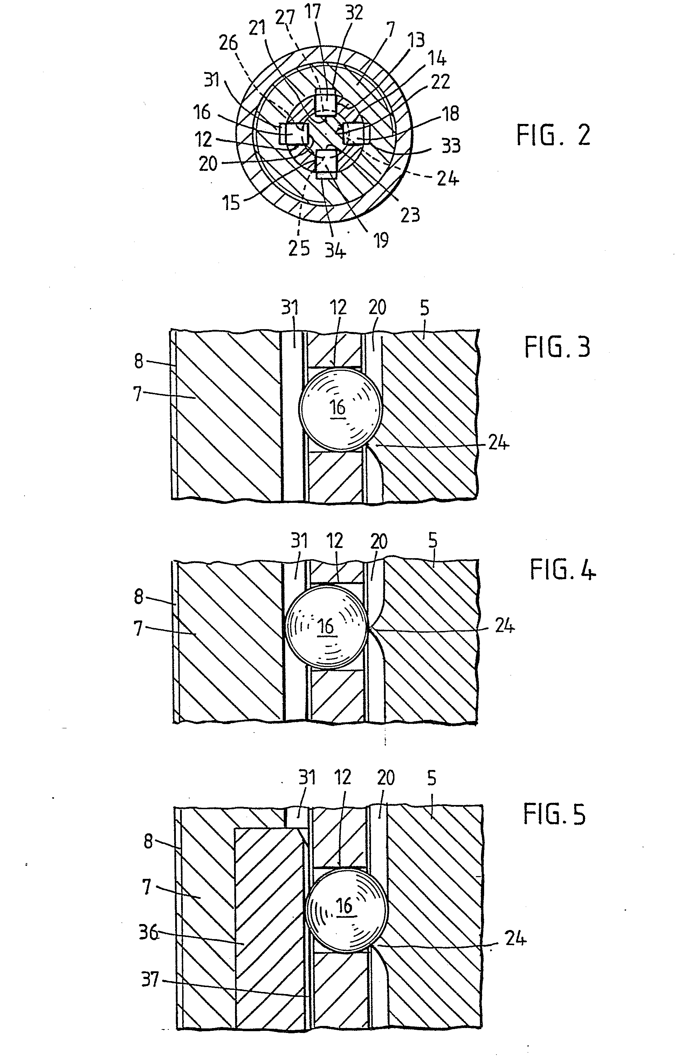

In Fig. 2 ist ein Schnitt gemäss Linie II-II der Fig. 1 dargestellt.

In Fig. 3 ist ein Nocken 24 des Stösselkolbens 5 mit daraufliegender Walze 16 im ersten Bereich der Führungshülse dargestellt. In diesem Bereich können die Walzen in die axialen Nuten der Führungshülse gedrückt werden, wobei bei Einwirken eines Hindernisses wie z.B. einer Hand auf den Stösselkolben 5 trotz Vorwärtsbewegung der Stösselhülse 4 der Stösselkolben nicht weiter vorwärts bewegt wird.

In Fig. 4 wird dargestellt, wie die Walze 16 durch den Nocken 25 in die axiale Nut 31 der Führungshülse gedrückt wird, wobei eine weitere Vorwärtsbewegung des Stösselkolbens 5 und damit eine Verletzungsgefahr ausgeschlossen wird.

In Fig. 5 ist der Stösselkolben 5 mit Walze 16 und dem Nocken 24 im Bereich der Kraftübertragungsbüchse 36 befindlich. In diesem Bereich können die Walzen durch die Nocken seitlich nicht weggedrückt werden, um ein Verschieben des Stösselkolbens 5 innerhalb der Stösselhülse 4 entgegen der Arbeitsbewegung zu ermöglichen. In diesem Bereich erfolgt der Arbeitsvorgang, z.B. das Nieten oder Stanzen.

Anstelle der Walzen könnten auch Kugeln oder Bolzen verwendet werden.

Patentansprüche

1. Handschutzvorrichtung für einen Maschinenteil mit einem in einer Führungshülse geführten kraftbeaufschlagten Kolben, dadurch gekennzeichnet, dass der Kolben einen ersten und einen zweiten Kolbenteil aufweist, welche Teile in einem ersten Bereich der Führungshülse gegeneinander verschiebbar und in einem zweiten Bereich der Führungshülse durch Koppelorgane starr miteinander verbunden sind.

2. Handschutzvorrichtung nach Patentanspruch 1, dadurch gekennzeichnet, dass der erste Kolbenteil als Stösselhülse und der zweite Kolbenteil als Stösselkolben ausgebildet sind.

3. Handschutzvorrichtung nach Patentanspruch 1 oder 2, dadurch gekennzeichnet, dass im ersten Bereich der Führungshülse im Bereich der Koppelorgane Nuten und im zweiten Bereich der Führungshülse eine Kraftübertragungsbüchse vorgesehen sind.

4. Handschutzvorrichtung nach einem der vorangehenden Patentansprüche, dadurch gekennzeichnet, dass die Stösselhülse Aussparungen zur Aufnahme der Koppelorgane aufweist.

5. Handschutzvorrichtung nach einem der vorangehenden Patentansprüche, dadurch gekennzeichnet, dass am Stösselkolben Nocken ausgebildet sind.

6. Handschutzvorrichtung nach einem der vorangehenden Patentansprüche, dadurch gekennzeichnet, dass die Koppelorgane als Walzen ausgebildet sind.

0118946

7.  Handschutzvorrichtung nach einem der Patentansprüche 1 bis 5, dadurch gekennzeichnet, dass die
Koppelorgane als Kugeln ausgebildet sind.

8.  Handschutzvorrichtung nach einem der Patentansprüche 1 bis 5, dadurch gekennzeichnet, dass die
Koppelorgane als Bolzen ausgebildet sind.

9.  Verwendung der Vorrichtung nach einem der vorangehenden Patentansprüche bei Pressen oder Nietmaschinen.

FIG. 1

FIG. 2

FIG. 3

FIG. 4

FIG. 5